# EUROPEAN PATENT SPECIFICATION

(11) **EP 3 762 299 B1**
(45) Date of publication and mention of the grant of the patent: **29.11.2023**
(21) Application number: 18908728.1
(22) Date of filing: 27.04.2018
(51) Int. Cl.: B65B 61/24, B65B 63/02, B65B 35/58, B65G 47/244

(54) **A BED TRANSFER UNIT**
BETTTRANSFEREINHEIT
UNITÉ DE TRANSFERT DE LIT

(30) Priority: 06.03.2018 TR 201803201
(43) Date of publication of application: 13.01.2021
(73) Proprietor: Elektroteks Elektronik Tekstil Sanayi Ve Ticaret Limited Sirketi, Nilufer/Bursa (TR)
(72) Inventor: GULER, Osman, 16400 Nilufer/Bursa (TR); OZEN, Murat, Nilufer/Bursa (TR)
(74) Representative: Kaya, Erdem
(86) International application number: PCT/TR2018/050191
(87) International publication number: WO 2019/172858

(56) References cited:
- EP-A1- 2 818 422
- DE-A1- 4 205 310
- DE-C- 964 578
- FR-A1- 2 861 693
- US-A- 6 098 378
- US-A1- 2007 000 755
- US-A1- 2008 086 984
- US-A1- 2015 203 221

## Description

### TECHNICAL FIELD

The present invention relates to a bed transfer unit particularly for transferring beds between vacuuming machines and roll machines.

### PRIOR ART

Today, in order to decrease stocking and transportation costs of beds, beds are reduced in size by means of vacuum and they are easily carried by forming roll. Accordingly, bed is placed into the vacuum machine and plastic-based material is coated thereon and the thickness of the bed is reduced by applying vacuum. Afterwards, the bed removed from the vacuum machine arrives at a folding unit by means of a conveyor and it is folded in two parts in coating unit. During folding, bed is folded so as to be reduced to half size. Thus, the bed shall come to the folding unit at the correct position and the bed shall be folded exactly through the center axis. In order to provide this, an additional conveyor may have to be used in order to provide the bed to come to the folding unit at the correct position. In other words, depending on the structure of the vacuum machine or depending on the placement of the bed inside the vacuum machine, the bed may have to be transferred to the folding unit by means of one or more conveyors and machines depending on the placement structure of the machine. The variable structure in this condition prevents the system from having a flexible operation structure. At the same time, this leads to a need for a greater installation area.

In the system disclosed in the application with number US2015203221A1, the products, of which the thickness is reduced by means of vacuum, can be packaged by forming rolls.

As a result, because of all of the abovementioned problems, an improvement is required in the related technical field.

### BRIEF DESCRIPTION OF THE INVENTION

The present invention relates to a transfer unit, for eliminating the above mentioned disadvantages and for bringing new advantages to the related technical field.

An object of the present invention is to provide a compact transfer unit where the beds exiting the vacuum machine are folded and transferred to the roll machine.

In order to realize all of the abovementioned objects and the objects which are to be deducted from the detailed description below, the present invention is a transfer unit for folding and transferring the beds vacuumed and packaged in the vacuuming machine. Accordingly, the subject matter transfer unit comprises at least one centering arm configured to hold the bed from the center thereof and to press the bed towards the operation plane; in order to change the extension direction of the bed in an operation plane whereon the beds, coming from the vacuuming machine, advance. Thus, the bed can be held through the center thereof and the bed can be rotated. Therefore, the bed, which comes to the transfer unit in a horizontal manner, can be rotated in a manner extending in the vertical direction.

In a possible embodiment of the present invention, at least one first conveyor and at least one second conveyor are provided which are positioned side by side and configured to be able to move in an independent manner from each other. Thus, the bed, held from the center thereof by means of the centering arm, can be rotated by means of operating the first conveyor and the second conveyor in opposite directions.

In a possible embodiment of the present invention, the centering arm comprises a rotary holder having rotational freedom.

In a possible embodiment of the present invention, the centering arm is configured to displace between an operation position where the centering arm extends orthogonally to the operation plane and a waiting position where the centering arm is diverged from the operation plane.

In a possible embodiment of the present invention, in order to provide movement freedom of the centering arm between the operation position and the waiting position, at least one rotary hinge is provided which provides connection to a chassis of the transfer unit.

In a possible embodiment of the present invention, in order to provide movement freedom of the centering arm between the operation position and the waiting position, at least one first positioning cylinder is provided which is connected to the chassis from one end and connected to the centering arm from the other end.

In a possible embodiment of the present invention, in order to provide approaching of the rotary holder towards the operation plane, there is at least one first press cylinder.

In a possible embodiment of the present invention, pluralities of measurement sensors are provided between the first conveyor and the second conveyor. Thus, the size of the bed coming to the transfer unit is measured and the center of the bed can be determined.

In a possible embodiment of the present invention, at least one correction wall is provided at the end which is opposite the input side of the first conveyor and of the second conveyor where the bed comes to the transfer unit. Thus, after the bed is rotated, the bed is pushed by means of the first conveyor and the second conveyor and is rested to the correction wall and the errors, if any, in the position are corrected.

In a possible embodiment of the present invention, at least one press arm is configured to displace between a folding position where press is exerted to the bed in a folding axis passing through the center thereof and a free position where the bed is diverged from the operation plane. Thus, the bed can be held from the folding axis.

In a possible embodiment of the present invention, pluralities of conveyor rolls are provided between the first conveyor and the second conveyor such that there are predetermined distances in between.

In a possible embodiment of the present invention, at least one folding profile is provided which passes between the conveyor rolls and configured to displace from a lower position which remains under the operation plane to a first position which remains above the operation plane and a second position where it approaches towards the folding axis from the first position. Thus, one end of the bed is firstly lifted upwardly and afterwards, the bed is folded by means of passing through the press arm.

In a possible embodiment of the present invention, the folding profile is configured to displace between the second position and a press position where the folding profile approaches the operation plane. Thus, the folded bed is pressed towards the operation plane and corrected.

In a possible embodiment of the present invention, pluralities of folding profiles are provided such that there is a predetermined distance in between.

In a possible embodiment of the present invention, in order to provide connection of the folding profiles with each other, at least one profile carrier is provided in at least one each ends thereof.

### BRIEF DESCRIPTION OF THE FIGURES

In Figure 1, 2 and 3, the representative isometric views of the subject matter transfer unit are given.
In Figure 4a and 4b, the representative views of the rotation steps of the bed in the subject matter transfer unit are given.
In Figure 5, a representative view of the form of the bed rested onto the correction wall in the subject matter transfer unit is given.
In Figure 6a, a representative view of the holding of the bed by means of the press arm prior to folding in the subject matter transfer unit is given.
In Figure 6b and 6c, the representative isometric and lateral views of the lifting of an end of the bed for folding in the subject matter transfer unit are given.
In Figure 6d and 6e, the representative isometric and lateral views of the passing of an end of the bed through the press arm by means of folding in the subject matter transfer unit are given.
In Figure 6f and 6g, the representative isometric and lateral views of the crushing of the folded bed by means of folding profiles in the subject matter transfer unit are given.
In Figure 7, a representative view of the pushing of the folded bed outwards the transfer unit in the subject matter transfer unit is given.

### DETAILED DESCRIPTION OF THE INVENTION

In this detailed description, the subject matter transfer unit (30) is explained with references to examples without forming any restrictive effect only in order to make the subject more understandable.

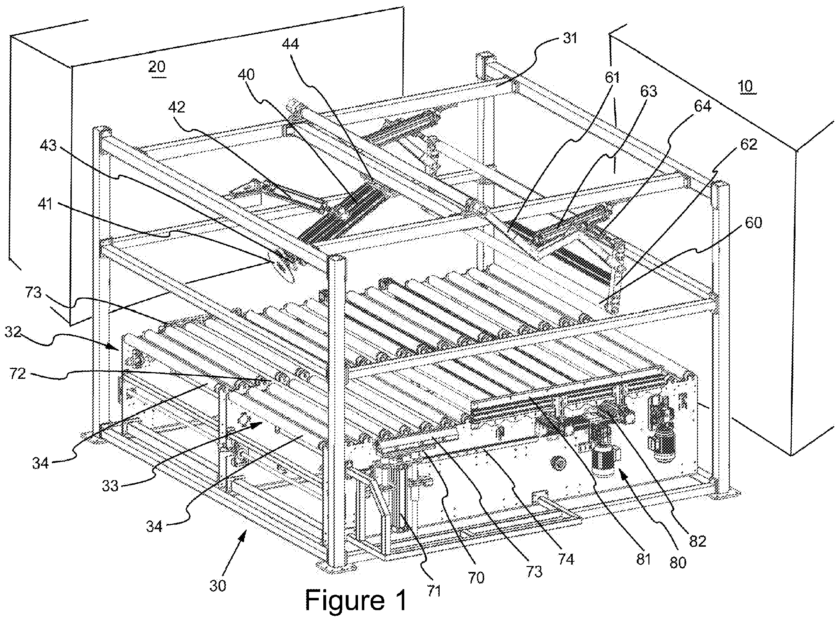

As can be seen in Figure 1, the subject matter transfer unit (30) is essentially positioned between the vacuuming machine (10) and the roll machine (20). In other possible embodiments of the present invention, a different line is added to an end of the transfer unit (30), and the bed can be transferred without forming roll.

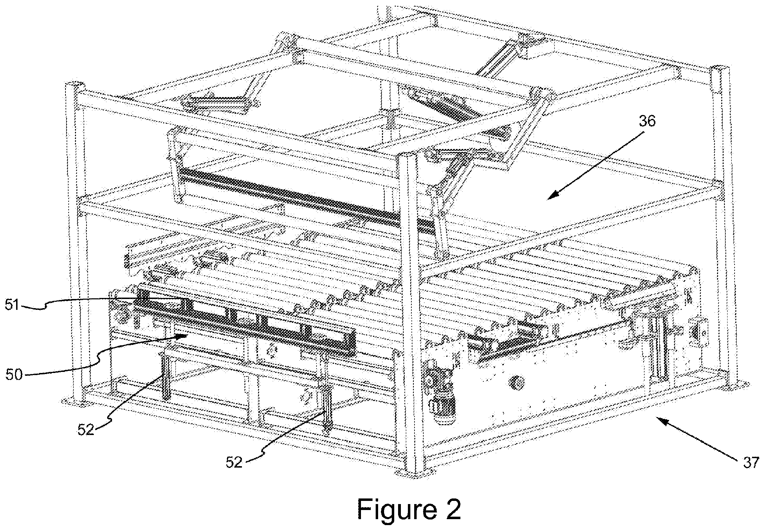

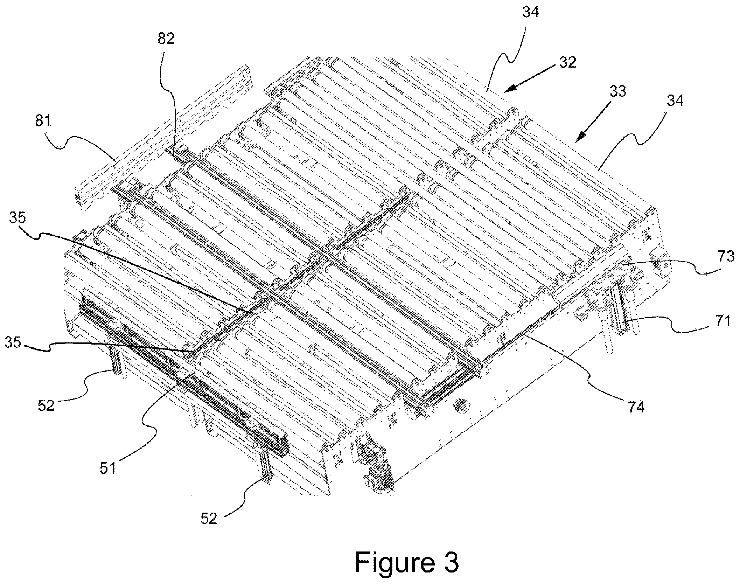

As can be seen in Figure 2 and 3, the subject matter transfer unit (30) has a chassis (31). Said chassis (31) comprises pluralities of profiles. The transfer unit (30) has at least one first conveyor (32) and at least one second conveyor (33). The first conveyor (32) and the second conveyor (33) are positioned side by side such that there is a predetermined distance in between. The first conveyor (32) and the second conveyor (33) have pluralities of conveyor rolls (34). The conveyor rolls (34), provided on the first conveyor (32), extend in a parallel manner to each other. The conveyor rolls (34), provided on the second conveyor (33), extend in a parallel manner to each other. Moreover, the conveyor rolls (34), which are provided on the first conveyor (32) and on the second conveyor (33), extend in the same direction. The first conveyor (32) and the second conveyor (33) are configured in a manner providing movement in the same direction or in opposite directions. The topmost parts of the conveyor rolls (34) are provided on the same plane and this plane is defined as an operation plane. In another possible embodiment of the present invention, the first conveyor (32) and the second conveyor (33) can be conveyors with belt.

A side of the first conveyor (32) and the second conveyor (33) is defined as an input side (36). Said input side (36) is connected to the vacuuming machine (10). An adjacent side of the input side (36) is defined as a discharge side (37). Said discharge side (37) is connected to the roll machine (20).

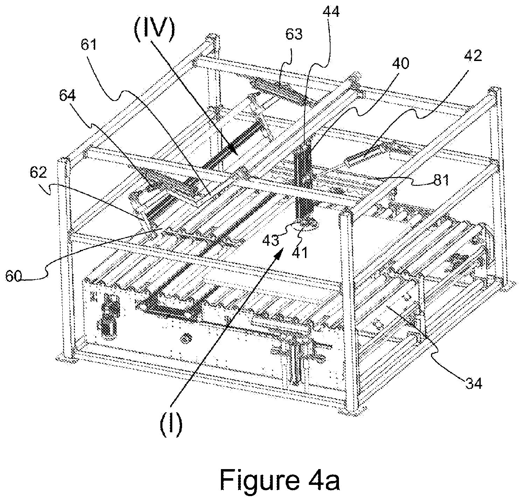

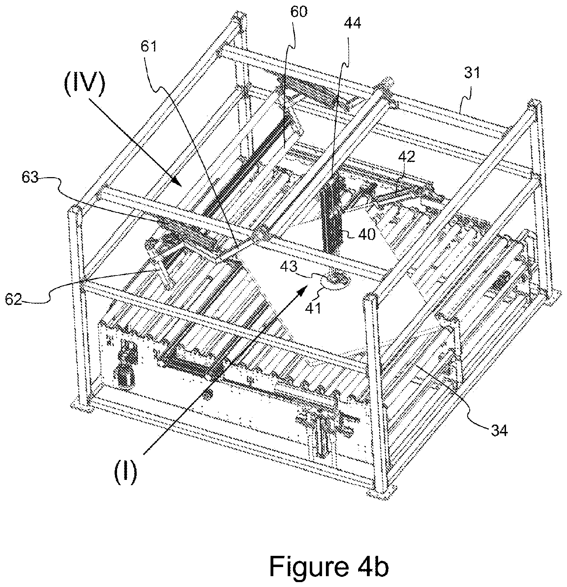

As can be seen in Figure 4a and 4b, there is a centering arm (40) provided at the upper side of the operation plane. Said centering arm (40) is connected to the chassis (31) from one side by means of a rotary hinge (44). Thus, the centering arm (40) realizes a rotational movement in the axis of the rotary hinge (44) and the centering arm (40) may displace between an operation position (I) where the centering arm (40) is orthogonal to the operation plane and a waiting position (II) where the centering arm (40) diverges from the operation plane. This movement of the centering arm (40) is provided by means of a first positioning cylinder (42) connected to the chassis (31) from one end and connected to the centering arm (40) from the other end. There is at least one rotary holder (41) provided at the idle end of the centering arm (40). Said rotary holder (41) is configured to be able to rotate in the extension axis of the centering arm (40). There is at least one first press cylinder (43) provided on the centering arm (40). Said first press cylinder (43) moves in a manner approaching the rotary holder (41) to the operation plane and in a manner providing diverging of the rotary holder (41) from the operation plane. In another possible embodiment of the present invention, the rotary holder (41) can rotate with the drive to be received from a drive source.

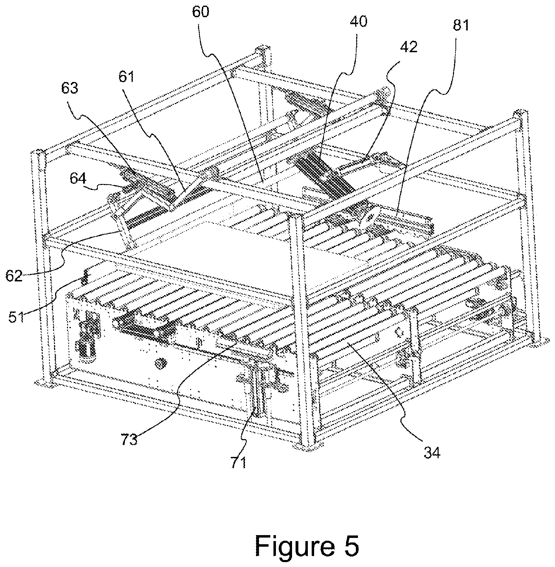

As can be seen in Figure 5, there is at least one correction unit (50) provided on the side opposite to the input side (36). Said correction unit (50) has a correction wall (51). Said correction wall (51) is configured to be able to rise over and lower below the operation plane. In a possible embodiment of the present invention, the correction wall (51) is connected to a lifting cylinder (52) and the correction wall (51) displaces vertically thanks to the lifting cylinder (52). In alternative embodiments, movement can be provided by using different movement units.

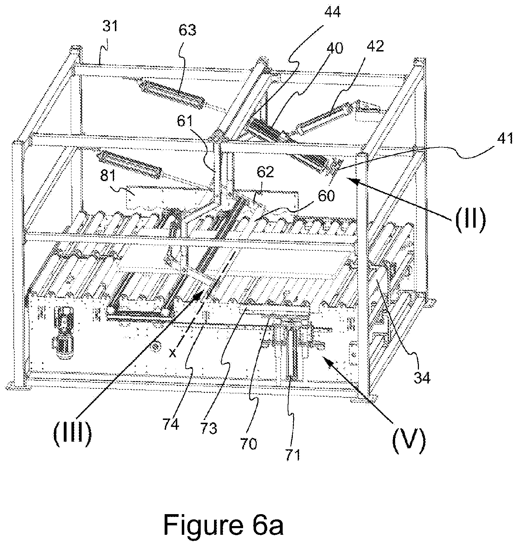

As can be seen in Figure 6a, there is at least one press arm (60) provided in the upper vicinity of the operation plane. Said press arm (60) at least partially extends along the width of the transfer unit (30). The press arm (60) is configured to move between a folding position (III) where it approaches the operation plane and a free position (IV) where it diverges from the operation plane. The press arm (60) is provided on an arm holder (62) connected onto an arm carrier (61) so as to have rotational freedom which is essentially connected to the chassis (31) so as to have rotational freedom. In other words, the press arm (60) is connected to one each arm holders (62) from the two ends thereof and the arm holders (62) are connected to the chassis (31) by means of arm carriers (61). There is at least one second positioning cylinder (63) connected to the arm carrier (61) from one end and connected to the chassis (31) from the other end. As said second positioning cylinder (63) is opened and closed, the arm carrier (61) displaces between the folding position (III) and the free position (IV).

The arm holder (62) is connected to the arm carrier (61) so as to have rotational freedom. The arm holder (62) is connected to the arm carrier (61) from a predetermined distance to an end of the arm carrier (61). There is at least one second press cylinder (64) connected to the arm carrier (61) from one end and connected to the arm holder (62) from the other end. As the second press cylinder (64) is opened and closed, the press arm (60), provided on the arm holder (62), can displace in an independent manner from the arm carrier (61).

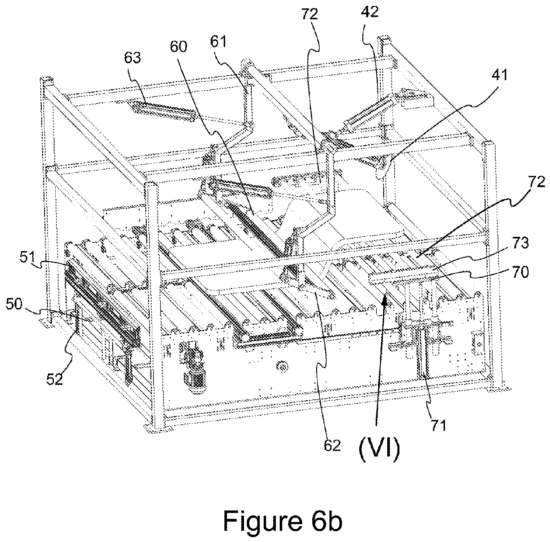

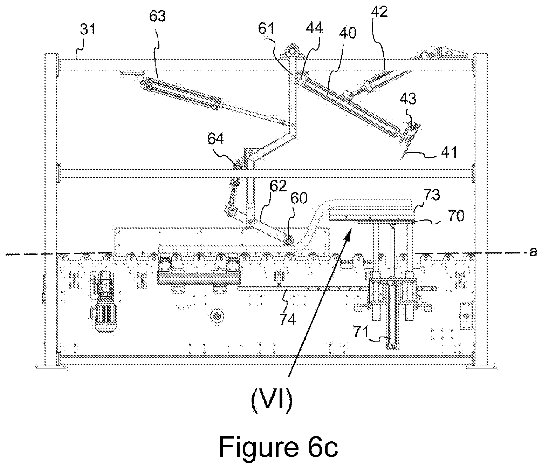

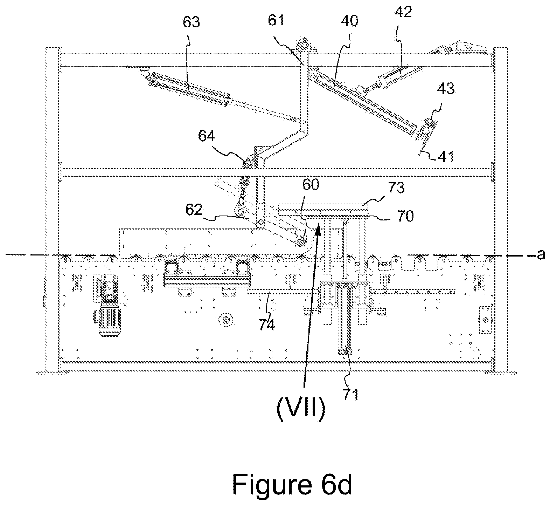

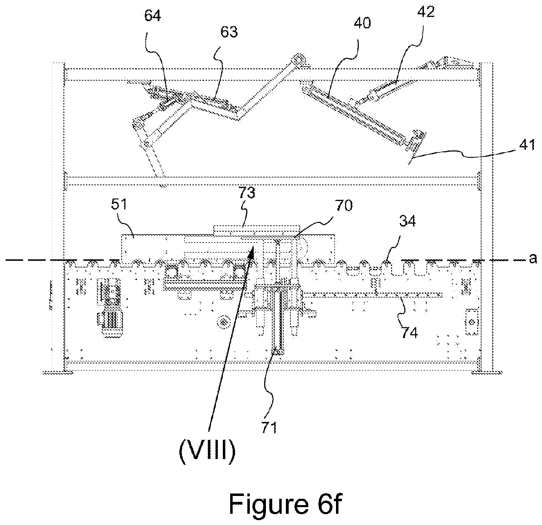

As can be seen in Figure 6b, 6c, 6d and 6f, the subject matter transfer unit (30) has at least one folding mechanism (70). In said folding mechanism (70), there is at least one folding profile (72) extending at least partially along the width of the transfer unit (30) between the conveyor rolls (34). The folding profile (72) is configured to displace between a lower position (V) where it stays under the operation plane, a first position (VI) where it rises over the operation plane at a predetermined amount, a second position (VII) where it displaces horizontally at a predetermined amount with respect to the first position (VI) and a press position (VIII) where it approaches at a predetermined amount with respect to the operation plane from the second position (VII). In a possible embodiment of the present invention, pluralities of folding profiles (72) are provided such that there is a predetermined distance in between. The folding profiles (72) are connected to each other by means of profile carriers (73) essentially provided at the ends thereof. There is at least one each vertical movement cylinders (71) connected by means of the folding profile (72). Moreover, the folding mechanism (70) has a horizontal movement rail (74) connected to the chassis (31). The folding mechanism (70) is configured to be able to displace in the direction of the horizontal movement rail (74) by means of the movement received from a drive element (not shown in the figures).

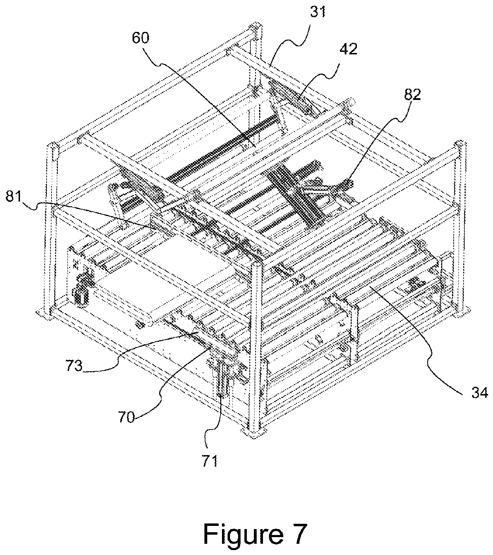

As can be seen in Figure 7, the subject matter transfer unit (30) has at least one discharge mechanism (80). Said discharge mechanism (80) has at least one pushing wall (81) configured to be able to linearly displace in the extension direction of the conveyor rolls (34). Said pushing wall (81) is moved by a linear movement unit (82).

In the light of the abovementioned structural details, the subject matter transfer unit (30) operates as follows.

With reference to Figure 4a and 4b, the bed coming from the vacuuming machine (10) enters into the transfer unit (30). The first conveyor (32) and the second conveyor (33) rotate in the same direction in the transfer unit (30) and advance the bed. The position of the bed is monitored by means of at least one measurement sensor (35) provided between the first conveyor (32) and the second conveyor (33). The bed length is measured by means of pluralities of measurement sensors (35), and when the center of the bed coincides with the extension direction of the centering arm (40) in the operation position (I), the first conveyor (32) and the second conveyor (33) are stopped. Afterwards, the centering arm (40) is brought to the operation position (I) by means of movement of the first positioning cylinder (42). Afterwards, the first press cylinder (43) and the rotary holder (41) at least partially exert pressure onto the bed. In other words, the bed is held from the center thereof by means of the rotary holder (41).

After the bed is held from the center thereof, the first conveyor (32) and the second conveyor (33) move by rotating in directions which are opposite to each other. By means of this, the bed begins rotating in the axis of centering arm (40). Thus, the bed is rotated 90 degrees. Thus, the bed, extending in the direction of width of the transfer unit (30), becomes extending in the direction of the length of the transfer unit (30). When the bed exits the vacuuming machine (10) in a longitudinally extending manner, the rotation process of the bed can be cancelled.

With reference to Figure 5, in a possible embodiment of the present invention, in order to provide position control of the bed, the first conveyor (32) and the second conveyor (33) operate in the same direction and drive the bed forwardly and the bed can be rested onto the correction wall (51). After the bed is rested onto the correction wall (51), since the first conveyor (32) and the second conveyor (33) continues operation, the bed is turned into a flat form. Afterwards, the first conveyor (32) and the second conveyor (33) operate in a rearward manner and they bring the center of the bed to the same level as the condition of the press arm (60) where the press arm (60) comes to folding position (III). Afterwards, as can be seen in Figure 6a, by means of the second positioning cylinder (63) and the second press cylinder (64), the press arm (60) presses the bed in a manner passing through the center of the bed.

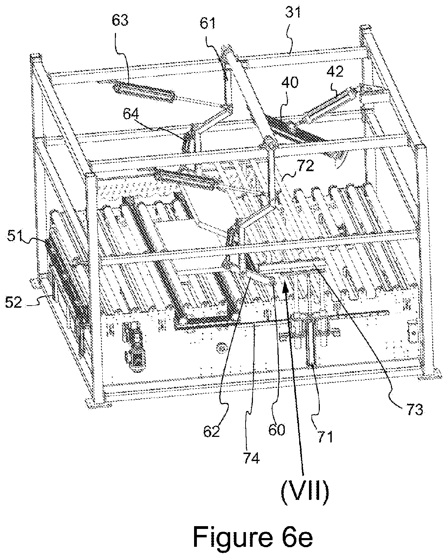

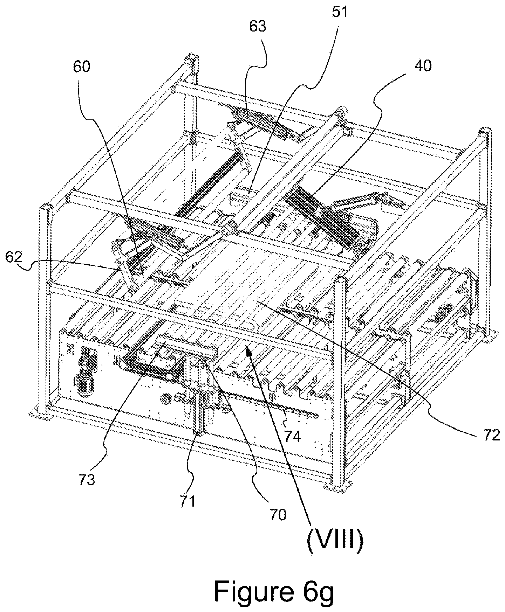

With reference to Figure 6b and 6c, after the press arm (60) holds the bed from the center axis thereof, the folding profiles (72) of the folding mechanism (70) are pushed by the vertical movement cylinders (71) and are brought from the lower position (V) to the first position (VI) and provide upward lifting of one side of the bed. Afterwards, with reference to Figure 6d and 6e, the folding mechanism (70) slide on the horizontal movement rail (74) and comes to the second position (VII) and folds one half of the bed onto the other half of the bed through the press arm (60). Afterwards, by means of the movement of the second positioning cylinder (63) and of the second press cylinder (64), the press arm (60) is removed from the bed. At the continuation, with reference to Figure 6f and 6g, the vertical movement cylinder (71) lowers the folding profiles (72) downwardly and brings the folding profiles (72) to the press position (VIII) and presses onto the folded bed and provides the folding to be permanent. Afterwards, the folding profile (72) returns to the lower position (V).

With reference to Figure 7, after the folding process of the bed is completed, the pushing wall (81) of the discharge mechanism (80) is pushed by the linear movement unit (82) and it is stopped onto an edge of the bed and pushes the bed and it reaches the bed to the roll machine (20) provided in the vicinity of the transfer unit (30).

In a possible embodiment of the present invention, after the bed is folded, as the first conveyor (32) and the second conveyor (33) operate in the same direction, it is possible to transfer the bed to a different conveyor which is to be provided at the opposite side of the vacuuming machine (10) and to transfer the bed without forming roll.

Thanks to the subject matter transfer unit (30), it is possible to rotate the bed, to fold the bed, to crush the bed and to transfer the bed to the roll machine (20) at the same location. Thus, there remains no need to use different units for each process and the operation of the system is provided in a narrower region.

Moreover, the transfer unit (30) can be operated in a synchronized manner by means of machines where the bed is vacuumed in a traverse or longitudinal manner. In other words, a compact transfer unit (30) is obtained which can operate together with different types of vacuum machines (10).

The protection scope of the present invention is set forth in the annexed Claims and cannot be restricted to the illustrative disclosures given above, under the detailed description. It is because a person skilled in the relevant art can obviously produce similar embodiments under the light of the foregoing disclosures, without departing from the main principles of the present invention.

### REFERENCE NUMBERS

10 Vacuuming machine
20 Roll machine
30 Transfer unit
31 Chassis
32 First conveyor
33 Second conveyor
34 Conveyor roll
35 Measurement sensor
36 Input side
37 Discharge side
40 Centering arm
41 Rotary holder
42 First positioning cylinder
43 First press cylinder
44 Rotary hinge
50 Correction unit
51 Correction wall
52 Lifting cylinder
60 Press arm
61 Arm carrier
62 Arm holder
63 Second positioning cylinder
64 Second press cylinder
70 Folding mechanism
71 Vertical movement cylinder
72 Folding profile
73 Profile carrier
74 Horizontal movement rail
80 Discharge mechanism
81 Pushing wall
82 Linear movement unit
I Operation position
II Waiting position
III Folding position
IV Free position
V Alt position
VI First position
VII Second position
VIII Press position
a Operation plane
x Folding axis

## Claims

1. A transfer unit (30) in which a bed packaged by vacuuming in a vacuuming machine (10) is able to be folded and transferred, the bed being advanced from the vacuuming machine (10) provided at an input side (36) of the transfer unit, **characterized by** comprising a centering arm (40) configured to hold the bed from the center thereof and to press the bed towards an operation plane in order to hold the center position of the bed while changing the extension direction of the bed in the operation plane by rotating about a vertical axis.

2. A transfer unit (30) according to claim 1, wherein at least one first conveyor (32) and at least one second conveyor (33) are provided which are positioned side by side and configured to be able to move in an independent manner from each other.

3. A transfer unit (30) according to claim 1, wherein the centering arm (40) comprises a rotary holder (41) having rotational freedom.

4. A transfer unit (30) according to claim 1, wherein the centering arm (40) is configured to displace between an operation position (I) where the centering arm (40) extends orthogonally to the operation plane and a waiting position (II) where the centering arm (40) is diverged from the operation plane.

5. A transfer unit (30) according to claim 4, wherein in order to provide movement freedom of the centering arm (40) between the operation position (I) and the waiting position (II), at least one rotary hinge (44) is provided which provides connection to a chassis (31) of the transfer unit (30).

6. A transfer unit (30) according to claim 5, wherein in order to provide movement freedom of the centering arm (40) between the operation position (I) and the waiting position (II), at least one first positioning cylinder (42) is provided which is connected to the chassis (31) from one end and connected to the centering arm (40) from the other end.

7. A transfer unit (30) according to claim 3, wherein in order to provide approaching of the rotary holder (41) towards the operation plane, there is at least one first press cylinder (43).

8. A transfer unit (30) according to claim 2, wherein pluralities of measurement sensors (35) are provided between the first conveyor (32) and the second conveyor (33) for measuring the length of the bed.

9. A transfer unit (30) according to claim 1, wherein to ensure position accuracy by leaning the bed at least one correction wall (51) is provided at the end which is opposite the input side (36) of the first conveyor (32) and of the second conveyor (33) where the bed comes to the transfer unit (10).

10. A transfer unit (30) according to claim 1, wherein at least one press arm (60) is configured to displace between a folding position (III) where press is exerted to the bed in a folding axis (x) passing through the center thereof and a free position (IV) where the bed is diverged from the operation plane to ensure that the bed is held from the center axis during folding.

11. A transfer unit (30) according to claim 2, wherein pluralities of conveyor rolls (34) are provided between the first conveyor (32) and the second conveyor (33) such that there are predetermined distances in between.

12. A transfer unit (30) according to claim 11, wherein at least one folding profile (72) is provided which passes between the conveyor rolls (34) and configured to displace from a lower position (V) which remains under the operation plane to a first position (VI) which remains above the operation plane and a second position (VII) where it approaches towards the folding axis (x) from the first position (VI) for lifting of one side of the bed.

13. A transfer unit (30) according to claim 12, wherein the folding profile (72) is configured to displace between the second position (VII) and a press position (VIII) where the folding profile (72) approaches the operation plane.

14. A transfer unit (30) according to claim 13, wherein pluralities of folding profiles (72) are provided such that there is a predetermined distance in between.

15. A transfer unit (30) according to claim 1, wherein at least one pushing wall (81) is provided configured to move from one side of the input side (36) towards the other side thereof and to push the bed.

## Patentansprüche

1. Transfereinheit (30), bei der ein in einer Vakuummaschine (10) vakuumiert verpacktes Bett
gefaltet und transferiert wird; das Bett wird von der an einer Eingangsseite (36) der Transfereinheit vorgesehenen Vakuummaschine (10) gefördert, **dadurch gekennzeichnet, dass** einen Zentrierarm (40) umfasst, der dazu ausgebildet ist, das Bett von seiner Zentrale zu halten und das Bett gegen die Betriebsebene zu drücken, um die Mittelposition des Betts während der Veränderung der Erstreckungsrichtung des Betts in der Betriebsebene durch Drehen um eine Hochachse zu bewahren.

2. Transfereinheit (30) gemäß Anspruch 1, wobei mindestens ein erster Förderer (32) und mindestens ein zweiter Förderer (33) vorgesehen sind, die nebeneinander positioniert sind und dazu ausgebildet sind, unabhängig voneinander zu verfahren.

3. Transfereinheit (30) gemäß Anspruch 1, wobei der Zentrierarm (40) einen Drehhalter (41) mit Rotationsfreiheit umfasst.

4. Transfereinheit (30) gemäß Anspruch 1, wobei der Zentrierarm (40) dazu ausgebildet ist, zwischen einer Betriebsstellung (I), in der sich der Zentrierarm (40) vertikal zur Betriebsebene erstreckt, und einer Warteposition (II), in der der Zentrierarm (40) von der Betriebsebene abweicht, zu verfahen.

5. Transfereinheit (30) gemäß Anspruch 4, wobei mindestens ein Drehgelenk (44) vorgesehen ist, das die Verbindung mit einem Fahrgestell (31) der Transfereinheit (30) vorsieht, um die Bewegungsfreiheit des Zentrierarms (40) zwischen der Betriebsstellung (I) und der Warteposition (II) vorzusehen.

6. Transfereinheit (30) gemäß Anspruch 5, wobei mindestens ein erster Stellzylinder (42) vorgesehen ist, der einenends mit dem Fahrgestell (31) und andernends mit dem Zentrierarm (40) verbindet wird, um die Bewegungsfreiheit des Zentrierarms (40) zwischen der Betriebsstellung (I) und der Warteposition (II) vorzusehen.

7. Transfereinheit (30) gemäß Anspruch 3, wobei mindestens ein erster Presszylinder (43) vorhanden ist, um vorzusehen, dass sich der Drehhalter (41) zur Betriebsebene hin nähert.

8. Transfereinheit (30) gemäß Anspruch 2, wobei eine Vielzahl von Messsensoren (35) zwischen dem ersten Förderer (32) und dem zweiten Förderer (33) zum Messen der Länge des Betts vorgesehen ist.

9. Transfereinheit (30) gemäß Anspruch 1, wobei mindestens eine Korrektionswand (51) an dem der Eingangsseite (36) des ersten Förderers (32) und des zweiten Förderers (33) gegenüberliegenden Ende vorgesehen ist, wo das Bett in die Transfereinheit (10) eintritt, um die Positionsgenauigkeit durch Neigung des Betts vorzusehen.

10. Transfereinheit (30) gemäß Anspruch 1, wobei mindestens ein Pressarm (60) dazu ausgebildet ist, zwischen einer Faltungsposition (III), in der auf das Bett ein Druck in der durch die Zentrale des Betts hindurch passierenden Faltachse (x) ausgeübt ist, und einer freien Position (IV), in der das Bett von der Betriebsebene abweicht, um das Bett während der Faltung von der Mittelachse gehalten zu werden, zu verfahren.

11. Transfereinheit (30) gemäß Anspruch 2, wobei eine Vielzahl von Förderrollen (34) zwischen dem ersten Förderer (32) und dem zweiten Förderer (33) derart vorgesehen ist, dass sich zwischen denen die vorgegebene Abstände befinden.

12. Transfereinheit (30) gemäß Anspruch 11, wobei mindestens ein Faltungsprofil (72) vorgesehen ist, welches zwischen die Förderrollen (34) passiert und dazu ausgebildet ist, von einer unter der Betriebsebene anliegenden unteren Position (V) nach einer ersten über der Betriebsebene anliegenden Position (VI) und nach einer zweiten Position (VII), in der sich es von der ersten Position (VI) zur Faltachse (x) hin zum Anheben eines Teils des Betts nähert, zu verfahren.

13. Transfereinheit (30) gemäß Anspruch 12, wobei das Faltungsprofil (72) dazu ausgebildet ist, zwischen der zweiten Position (VII) und der Pressenstellung (VIII), in der sich das Faltungsprofil (72) zur Betriebsebene hin nähert, zu verfahren.

14. Transfereinheit (30) gemäß Anspruch 13, wobei eine Vielzahl von Faltungsprofilen (72) derart vorgesehen ist, dass sich zwischen denen ein vorgegebener Abstand befindet.

15. Transfereinheit (30) gemäß Anspruch 1, wobei mindestens eine Drückerwand (81) vorgesehen ist, welche dazu ausgebildet ist, von einer Seite zur anderen Seite der Eingangsseite (36) zu verfahren und das Bett zu drücken.

## Revendications

1. Unité de transfert (30) dans laquelle un lit emballé en mettant sous vide dans une machine à vide (10) est peut être plié et transféré, le lit étant avancé de la machine à vide (10) fournie à un côté d'entrée (36) de l'unité de transfert, **caractérisée en ce qu'**elle comprend un bras de centrage (40) configuré pour maintenir le lit à partir de son centre et pour presser le lit vers un plan d'opération afin de maintenir la position centrale du lit tout en changeant la direction d'extension du lit dans le plan d'opération en tournant autour d'un axe vertical.

2. Unité de transfert (30) selon la revendication 1, dans laquelle au moins un premier convoyeur (32) et au moins un second convoyeur (33) sont fournis côte à côte et configurés pour pouvoir se déplacer de manière indépendante l'un de l'autre.

3. Unité de transfert (30) selon la revendication 1, dans laquelle le bras de centrage (40) comprend un support rotatif (41) ayant une liberté de rotation.

4. Unité de transfert (30) selon la revendication 1, dans laquelle le bras de centrage (40) est configuré pour se déplacer entre une position d'opération (I) dans laquelle le bras de centrage (40) s'étend orthogonalement au plan d'opération et une position d'attente (II) dans laquelle le bras de centrage (40) est dévié du plan d'opération.

5. Unité de transfert (30) selon la revendication 4, dans laquelle afin de fournir la liberté de mouvement du bras de centrage (40) entre la position d'opération (I) et la position d'attente (II), au moins une charnière rotative (44) qui fournit une connexion à un châssis (31) de l'unité de transfert (30) est fournie.

6. Unité de transfert (30) selon la revendication 5, dans laquelle afin de fournir la liberté de mouvement du bras de centrage (40) entre la position d'opération (I) et la position d'attente (II), au moins un premier cylindre de positionnement (42) qui est connecté au châssis (31) d'un extrémité et connecté au bras de centrage (40) de l'autre extrémité est fourni.

7. Unité de transfert (30) selon la revendication 3, dans laquelle afin de founir l'approche du support rotatif (41) vers le plan d'opération, il y a au moins un premier cylindre de pression (43).

8. Unité de transfert (30) selon la revendication 2, dans laquelle des pluralités de capteurs de mesure (35) sont fournis entre le premier convoyeur (32) et le second convoyeur (33) pour mesurer la longueur du lit.

9. Unité de transfert (30) selon la revendication 1, dans laquelle pour assurer la précision de la position en inclinant le lit, au moins une paroi de correction (51) est fournie à l'extrémité qui est opposée au côté d'entrée (36) du premier convoyeur (32) et du second convoyeur (33) où le lit arrive à l'unité de transfert (10).

10. Unité de transfert (30) selon la revendication 1, dans laquelle au moins un bras de presse (60) est configuré pour se déplacer entre une position de pliage (III) dans laquelle une presse est exercée au lit dans un axe de pliage (x) passant par le centre de celui-ci et une position libre (IV) dans laquelle le lit est dévié du plan d'opération pour assurer que le lit est maintenu à partir de l'axe central pendant le pliage.

11. Unité de transfert (30) selon la revendication 2, dans laquelle des pluralités de rouleaux de convoyeur (34) sont prévus entre le premier convoyeur (32) et le second convoyeur (33) de manière à ce qu'il y ait des distances prédéterminées entre eux.

12. Unité de transfert (30) selon la revendication 11, dans laquelle au moins un profil de pliage (72) qui passe entre les rouleaux du convoyeur (34) et qui est configuré pour se déplacer d'une position inférieure (V) qui reste sous le plan d'opération à une première position (VI) qui reste au-dessus du plan d'opération et à une seconde position (VII) où il se rapproche de l'axe de pliage (x) à partir de la première position (VI) pour le levage d'un côté du lit est fourni.

13. Unité de transfert (30) selon la revendication 12, dans laquelle le profil de pliage (72) est configuré pour se déplacer entre la seconde position (VII) et une position de presse (VIII) dans laquelle le profil de pliage (72) s'approche du plan d'opération.

14. Unité de transfert (30) selon la revendication 13, dans laquelle des pluralités de profils de pliage (72) sont fournis de manière à ce qu'il y ait une distance prédéterminée entre eux.

15. Unité de transfert (30) selon la revendication 1, dans laquelle au moins une paroi de poussée (81) qui est configurée pour se déplacer d'un côté du côté d'entrée (36) vers l'autre côté de celle-ci et pour pousser le lit est fournie.
